# FASCICULE DE BREVET EUROPEEN

(11) **EP 1 963 004 B1**
(45) Date de publication et mention de la délivrance du brevet: **26.09.2018**
(21) Numéro de dépôt: 06830314.8
(22) Date de dépôt: 04.12.2006
(51) Int. Cl.: B01J 19/12

(54) **SYSTEME ET PROCEDE DE PRODUCTION DE POUDRES NANOMETRIQUES OU SUB-MICROMETRIQUES EN FLUX CONTINU SOUS L'ACTION D'UNE PYROLYSE LASER**
SYSTEM UND VERFAHREN ZUR HERSTELLUNG VON NANOSKALIGEN ODER SUBMIKROSKALIGEN PULVERN ALS KONTINUIERLICHER STROM DURCH DIE EINWIRKUNG VON LASERPYROLYSE
SYSTEM AND PROCESS FOR PRODUCING NANOSCALE OR SUBMICRONSCALE POWDERS AS A CONTINUOUS STREAM THROUGH THE ACTION OF LASER PYROLYSIS

(30) Priorité: 08.12.2005 FR 0553772
(43) Date de publication de la demande: 03.09.2008
(73) Titulaire: Commissariat à l'Énergie Atomique et aux Énergies Alternatives, 75015 Paris (FR)
(72) Inventeur: TENEGAL, François, F-75014 Paris (FR); GUIZARD, Benoît, F-94000 Créteil (FR)
(74) Mandataire: Ilgart, Jean-Christophe
(86) Numéro de dépôt international: PCT/EP2006/069248
(87) Numéro de publication internationale: WO 2007/065870

(56) Documents cités:
- WO-A-00/27523
- WO-A-98/37961
- WO-A-2006/051233
- WO-A1-01/07155
- US-A- 6 068 800
- US-A1- 2005 205 838

## Description

### DOMAINE TECHNIQUE

La présente invention concerne un système et un procédé de production de poudres nanométriques ou sub-micrométriques en flux continu sous l'action d'une pyrolyse laser.

### ÉTAT DE LA TECHNIQUE ANTÉRIEURE

Dans le domaine des matériaux denses élaborés par métallurgie de poudres, les propriétés de résistance à la rupture, de dureté, de résistance à l'usure, pour des applications mécaniques et thermomécaniques, tendent à s'améliorer à mesure que la taille des grains de poudre diminue. Lorsque cette taille atteint le domaine nanométrique (1 à 100 nanomètres) ces propriétés peuvent évoluer fortement, et une bonne aptitude au fluage peut être alors observée, avec une éventuelle superplasticité (un matériau polycristallin est qualifié de superplastique lorsqu'il peut supporter une déformation en traction de plus de 100% sans manifester de striction) dans le cas du ZrO₂, SiC, nanocomposites Si₃N₄/SiC, et Cu. L'aptitude au fluage permet d'envisager, par exemple, le formage à chaud de céramiques en évitant les étapes d'usinage. Mais les procédés d'élaboration de matériaux utilisant des poudres nanométriques sont encore mal maîtrisés en raison des caractéristiques spécifiques de ces poudres (réactivité, agglomération...), de leur disponibilité et de leur coût. En ce qui concerne les poudres nanométriques non-oxydes, les effets pyrophoriques peuvent s'avérer dangereux et rendre nécessaire la formation d'une couche à écran de surface. L'enrobage des grains par des matériaux écrans, organiques ou minéraux, est alors souhaitable.

Dans le domaine de la catalyse pour le traitement des effluents, des poudres oxydes nanométriques dopées par des métaux (pour la catalyse) permettent d'obtenir des dépôts avec une activité catalytique accrue, à condition d'obtenir une bonne dispersion des phases actives à la surface de ces poudres.

Dans le domaine de la cosmétique, l'utilisation de poudres en TiO₂ ou en ZnO dans les formulations permet d'accroître la protection dans le domaine ultraviolet. L'utilisation de poudres nanométriques photochromiques permet également l'émergence de nouveaux produits colorés.

Dans le domaine des dispositifs à écrans plats, l'utilisation de poudres nanométriques permet de réaliser des dépôts fortement luminescents de longueur d'onde ajustable (P dopé ZnO ou ZnS, Si).

Dans le domaine du stockage de l'énergie, l'utilisation de poudres nanométriques oxydes composites pour l'élaboration d'électrodes de batteries au lithium permet d'augmenter les capacités de stockage énergétique.

Dans ces différents domaines l'utilisation de poudres nanométriques (5-100 nanomètres) ou sub-micrométriques (100 - 500 nanomètres) permet ainsi d'obtenir de remarquables améliorations de propriétés.

De nombreuses méthodes de synthèse de telles poudres existent, notamment la pyrolyse laser en flux. Cette méthode est basée sur l'interaction entre l'émission d'un laser de puissance au CO₂ et un flux de réactifs constitué de gaz, de liquide sous forme d'aérosols ou de mélange des deux, de sorte que la composition chimique de la poudre peut être multiéléments. La vitesse de passage des réactifs dans le faisceau laser permet de contrôler la taille des poudres. Le flux de réactifs absorbe l'énergie du faisceau laser, ce qui conduit à la décomposition des molécules de réactifs puis la formation de particules par germination homogène et croissance dans une flamme. La croissance des particules est bloquée par effet de trempe. Cette méthode est une méthode souple de mise en oeuvre permettant la synthèse de poudres nanométriques variées de type carbure, oxyde ou nitrure avec de hauts rendements. Elle est également adaptée à la synthèse de poudres composites telles que les poudres Si/C/N ou encore Si/C/B.

Le document référencé [1] en fin de description décrit un dispositif de synthèse de masse de telles poudres, par pyrolyse laser en flux en allongeant la section les injecteurs de réactifs le long du grand axe du faisceau laser. Ce dispositif comprend une chambre de réaction avec une fenêtre pour introduire le faisceau laser et une ouverture allongée des injecteurs. Dans ce dispositif une focalisation radiale par lentille entraîne une augmentation de densité de puissance au point focal mais aussi une réduction des taux de production car la section des injecteurs doit être réduite par rapport au cas non-focalisé. Ce dispositif fait abstraction du paramètre densité de puissance qui est un paramètre clé influant sur la structure, la composition, la taille des grains de poudre ainsi que sur les rendements. Ce dispositif ne permet pas d'assurer une production à grande échelle de poudres nécessitant l'utilisation de fortes densités de puissance. L'extrapolation des taux de production se fait donc au détriment d'un possible ajustement des caractéristiques des poudres. De plus la section des injecteurs ne peut être allongée de façon trop importante dans l'axe du faisceau laser. En effet à mesure que le flux de réactif est pénétré par le laser, il y a absorption progressive de l'énergie jusqu'à ce que l'énergie restante ne soit plus suffisante. La réaction de pyrolyse étant une réaction à effet de seuil, il y a un moment où l'énergie incidente par centimètres carré devient trop faible pour initier la réaction de synthèse. De plus, la diminution de la quantité d'énergie absorbée à mesure que le flux de réactifs est pénétré peut être de nature à induire des modifications de structure, de taille et de composition de la poudre formée sur un même lot, d'autant plus que la puissance laser incidente est élevée.

Le document référencé {2] en fin de description décrit des procédés de production de particules abrasives, par exemple nanométriques. Ce document divulgue l'interaction entre un faisceau émis par un laser et un flux de réactif en une zone d'interaction. Mais ces procédés ne permettent pas de forts taux de production sur une large gamme de densités de puissance

L'invention a pour objet de pallier ces inconvénients en permettant, par synthèse de masse de poudres nanométriques ou sub-micrométriques reposant sur le principe de la pyrolyse laser en flux, de produire à faible coût plus de 500 grammes par heure de telles poudres en flux continu.

### EXPOSÉ DE L'INVENTION

L'invention concerne un système de production de poudres nanométriques ou sub-micrométriques en flux continu sous l'action d'une pyrolyse laser par interaction entre un faisceau émis par un laser et un flux de réactifs émis par au moins un injecteur, caractérisé en ce que le laser est suivi d'un dispositif optique permettant de répartir l'énergie du faisceau selon un axe perpendiculaire à l'axe du flux de réactifs en une section allongée, par exemple rectangulaire, de dimensions réglables au niveau d'au moins une zone d'interaction entre le faisceau et un flux de réactifs émis par au moins deux injecteurs placés perpendiculairement à l'axe du faisceau.

Avantageusement la densité de puissance du faisceau est identique avant d'atteindre chaque zone d'interaction.

Par rapport au document référencé [2] le fait que le dispositif optique permet de répartir l'énergie du faisceau laser selon un axe perpendiculaire à l'axe du flux des réactifs en une section allongée de dimension réglables permet d'accroître significativement les taux de production sur une large gamme de densité de puissance.

L'invention concerne également un procédé de production de poudres nanométriques ou sub-micrométriques en flux continu sous l'action d'une pyrolyse laser par interaction entre un faisceau émis par un laser et un flux de réactifs émis par au moins un injecteur, caractérisé en ce que l'on répartit l'énergie du faisceau selon un axe perpendiculaire à l'axe du flux de réactifs en une section allongée, par exemple rectangulaire, de dimensions réglables au niveau d'au moins une zone d'interaction entre ce faisceau et un flux de réactifs émis par au moins deux injecteurs placés perpendiculairement à l'axe du faisceau.

Avantageusement, on compense la perte par absorption de densité de puissance de ce faisceau dans une zone d'interaction par une concentration du flux d'énergie dans la zone d'interaction suivante.

Dans un premier mode de réalisation, on produit des mélanges de nanoparticules de différentes natures en changeant la nature des précurseurs d'un injecteur à l'autre pour une même zone d'interaction.

Dans un second mode de réalisation, on introduit des traceurs dans des lots de nanoparticules afin de pouvoir suivre les lots de nanoparticules après leur synthèse, ceci étant réalisé en utilisant un des injecteurs d'une zone d'interaction pour la synthèse ou l'introduction d'espèces traçantes.

Le procédé de l'invention permet d'assurer la production de grandes quantités (supérieur à 500 grammes/heure) de poudres nanométriques (5-100 nanomètres) ou sub-micrométriques (100 - 500 nanomètres) en flux continu. Le procédé de l'invention permet de favoriser les taux de production horaires et de consommer la quasi-totalité (plus de 90%) de l'énergie du laser. Il permet, en outre, de produire des poudres de mêmes caractéristiques (composition chimique, structure, taille, rendements) en sortie des différentes zones d'interaction. Il permet, enfin, de produire des poudres avec des rendements chimiques améliorés.

Le procédé de l'invention permet de changer la densité de puissance incidente, en fonction des caractéristiques souhaitées de la poudre, en modifiant la position des injecteurs le long de l'axe du faisceau laser ou en modulant la puissance en sortie du laser.

### BRÈVE DESCRIPTION DES DESSINS

La figure 1 illustre schématiquement un système de production de poudres nanométriques ou sub-micrométriques en flux continu sous l'action d'une pyrolyse laser.
La figure 2 illustre le système de l'invention.

### EXPOSÉ DÉTAILLÉ DE MODES DE RÉALISATION PARTICULIERS

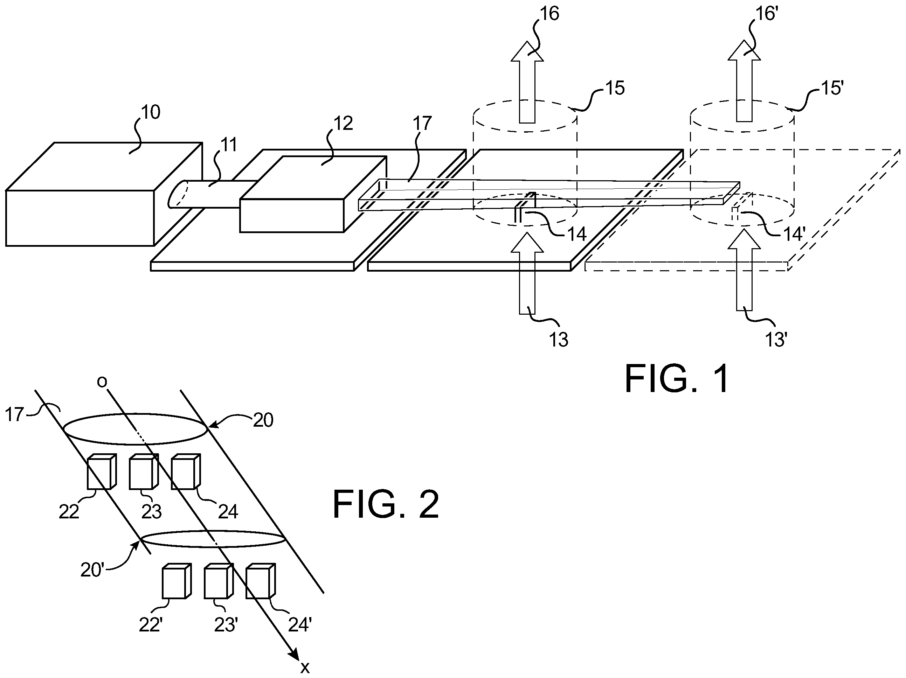

Comme illustré sur la figure 1, un système de production de poudres nanométriques ou sub-micrométriques en flux continu sous l'action d'une pyrolyse laser peut comprendre un laser 10, qui délivre un faisceau 11, suivi d'un dispositif optique 12 permettant de répartir en 17 l'énergie de faisceau, selon un axe perpendiculaire à l'axe d'un flux de réactifs 13, en une section allongée, par exemple rectangulaire ou elliptique, de dimensions réglables, au niveau d'au moins une zone d'interaction 15 entre ce faisceau et ce flux de réactifs 13 émis par au moins un injecteur 14, la production de poudres étant référencée 16.

La mise en forme du faisceau laser sous forme allongée, par exemple rectangulaire, favorise de forts taux de production horaires pour des poudres dont on peut ajuster la taille, la composition et la structure. L'énergie du faisceau peut ainsi être répartie sur une section rectangulaire ou elliptique dont on peut changer indépendamment la largeur ou la hauteur.

L'ajustement de la densité de puissance autorisé par une telle mise en forme permet de former des poudres de tailles pouvant excéder les 100 nanomètres et se rapprocher des 500 nanomètres. Le grossissement des grains peut également être obtenu en réduisant fortement les débits de réactifs.

Avantageusement l'énergie du faisceau laser peut être absorbée en plusieurs zones d'interactions successives 15, 15' jusqu'à ce que l'énergie du faisceau laser soit totalement absorbée. Le paramètre densité de puissance est alors maintenu identique en toutes les zones d'interaction, en compensant la perte par absorption en une zone donnée N-1 par une concentration du flux d'énergie en zone suivante N. On absorbe ainsi la quasi-totalité du flux d'énergie pour produire les poudres nanométriques, les zones d'interaction 15, 15' produisant de moins en moins de poudres à mesure que l'on avance sur le trajet du faisceau. On obtient ainsi un rendement énergétique maximum.

Ce procédé présente ainsi de nombreux avantages par rapport au procédé, analysé ci-dessus, décrit dans le document référencé [1], notamment :
- L'augmentation du taux de production est obtenue par une extension latérale de la section d'injection des réactifs.
- La mise en forme allongée, par exemple rectangulaire ou elliptique, du faisceau laser permet d'accroître significativement les taux de production sur une large gamme de densité de puissance.
- La section d'émission des réactifs des injecteurs peut être maintenue constante sur une plus grande plage de densité de puissance.

Par rapport au système illustré sur la figure 1, le système de l'invention comprend au moins une zone d'interaction 20, 20' entre le faisceau 17 et un flux de réactifs émis par plusieurs injecteurs 22, 23, 24 placés perpendiculairement à l'axe OX du faisceau 17 de sorte que les flux de réactifs sortant des injecteurs soient tous recouverts par la tâche allongée.

Sur la figure 2, la première zone d'interaction 20 peut être une zone de densité de puissance P. La seconde zone 20' peut également être une zone de densité de puissance P du fait de la focalisation verticale qui compense les pertes par absorption au niveau de la première zone 20.

Une telle configuration présente plusieurs avantages :
1 - Du point de vue de l'homogénéité des particules produites, cette configuration permet de produire des particules de poudres ayant une distribution en taille plus étroite que dans le cas du système illustré sur la figure 1 avec des taux de production analogues.
   Dans un exemple de production de poudres nanométriques de SiC en utilisant trois injecteurs 22, 23, 24 placés perpendiculairement à l'axe OX du faisceau 11, on utilise un dispositif optique 12 afin de répartir la puissance selon un axe perpendiculaire à l'axe du faisceau 11. Les débits de mélange de silane (SiH₄) et d'acétylène (C₂H₂), qui sont les gaz précurseurs utilisés pour produire des particules nanométriques en SiC, sont de respectivement 3 et 1.5 l/minute. Chaque injecteur produit, de façon indépendante de son voisin, 300 g/h de nanoparticules de SiC ayant un diamètre moyen de 20nm et avec une distribution en taille de + ou - 5nm. Au total, on produit donc 900 g/h de nanoparticules en SiC ayant un diamètre de 20 nm +/- 5nm.
   Il est intéressant d'avoir une faible distribution en taille pour plusieurs applications. Les propriétés des céramiques frittées et plus particulièrement des nanocéramiques sont, par exemple, fortement dépendantes de la dispersion en tailles des grains les constituant, cette dispersion étant elle-même dépendante de la dispersion en taille des particules des lots de poudres utilisés. Il est, par exemple, connu que pour obtenir des céramiques à propriétés mécaniques ou thermomécaniques améliorées, il est nécessaire que ces dernières présentent une faible distribution autour de la taille moyenne des grains.
2 - On peut produire des mélanges de nanoparticules de différentes natures en changeant la nature des précurseurs d'un injecteur à l'autre pour une même zone d'interaction. Ainsi, on peut former in situ des mélanges de poudres. Cette opération de mélange in situ permet d'éviter les opérations de mélange ex-situ de poudres nanométriques pouvant se révéler particulièrement dangereuses. En effet, certaines nanoparticules pourraient s'avérer toxiques. Il est donc important de mettre en oeuvre des moyens sécurisés pour les produire et les manipuler, les mélanger. C'est le cas du système de l'invention.
3 - On peut envisager d'introduire des traceurs dans des lots de nanoparticules afin de pouvoir suivre les lots de nanoparticules après leur synthèse. Ceci peut être réalisé en utilisant un des injecteurs d'une zone d'interaction pour la synthèse ou l'introduction d'espèces traçantes (Quantum dots de silicium par exemple). Ces traceurs attachés aux lots de nanoparticules peuvent avoir des applications dans le domaine de la prévention des risques associés à la manipulation des lots de nanoparticules. En effet ces traceurs permettent de suivre les particules tout au long de la chaîne de transformation (de la synthèse du lot à son intégration dans le produit final) et de contrôler l'efficacité des systèmes de confinement (pour les personnes ou l'environnement) par la mise en place de détecteurs adaptés.

### RÉFÉRENCES

[1] WO 98/37961
[2] US 2001/045 063

## Revendications

1. Système de production de poudres nanométriques ou sub-micrométriques en flux continu sous l'action d'une pyrolyse laser comprenant un laser (10) émettant un faisceau (11) selon un axe OX suivi d'un dispositif optique (12) permettant de transmettre un faisceau de forme allongée ayant son énergie répartie selon un premier axe perpendiculaire à l'axe OX de propagation du faisceau en une section allongée de dimensions réglables, dans lequel au moins la largeur ou la hauteur de la section allongée peut être changée indépendamment, au moins une zone d'interaction (20, 20') entre le faisceau allongé et au moins deux flux de réactifs qui sont perpendiculaires à un plan dans lequel l'axe OX et le premier axe sont situés, au moins deux injecteurs (22, 23, 24 ; 22', 23', 24') émettant respectivement les aux moins deux flux de réactif, les au moins deux injecteurs étant situés le long d'un axe parallèle au premier axe de sorte que le flux de réactifs sortant de ces au moins deux injecteurs soit recouvert par la section allongée du faisceau.

2. Système selon la revendication 1, dans lequel la section allongée est une section rectangulaire.

3. Système selon la revendication 1, dans lequel la densité de puissance du faisceau est identique avant d'atteindre chaque zone d'interaction.

4. Procédé de production de poudres nanométriques ou sub-micrométriques en flux continu sous l'action d'une pyrolyse laser dans lequel l'énergie d'un laser émettant un faisceau (11) selon un axe OX suivi d'un dispositif optique (12) permettant de transmettre un faisceau de forme allongée est répartie selon un premier axe perpendiculaire à l'axe OX de propagation du faisceau en une section allongée de dimensions réglables, dans lequel au moins la largeur ou la hauteur de la section allongée peut être changée indépendamment, et interagit en au moins une zone d'interaction (20, 20') entre le faisceau allongé et au moins deux flux de réactifs qui sont perpendiculaires à un plan dans lequel l'axe OX et le premier axe sont situés, au moins deux injecteurs (22, 23, 24 ; 22', 23', 24') émettant respectivement les aux moins deux flux de réactif, les au moins deux injecteurs étant situés le long d'un axe parallèle au premier axe de sorte que le flux de réactifs sortant de ces au moins deux injecteurs soit recouvert par la section allongée du faisceau.

5. Procédé selon la revendication 4, dans lequel la section allongée est une section rectangulaire ou elliptique.

6. Procédé selon la revendication 4, dans lequel on compense la perte de densité de puissance de ce faisceau par absorption dans une zone d'interaction par une concentration du flux d'énergie dans la zone d'interaction suivante.

7. Procédé selon la revendication 4, dans lequel on change la nature des précurseurs d'un injecteur à l'autre pour une même zone d'interaction.

8. Procédé selon la revendication 4, dans lequel on utilise un injecteur d'une zone d'interaction pour la synthèse ou l'introduction d'espèces traçantes.

## Patentansprüche

1. System zur Produktion von nanometrischen oder submikrometrischen Pulvern in einem kontinuierlichen Strom unter der Einwirkung einer Laserpyrolyse, umfassend einen Laser (10), der einen Strahl (11) entlang einer Achse OX emittiert, gefolgt von einer optischen Vorrichtung (12), die es erlaubt, einen Strahl mit länglicher Form zu transmittieren, dessen Energie verteilt ist entlang einer ersten Achse orthogonal zur Achse OX der Ausbreitung des Strahls in einem länglichen Querschnitt mit einstellbaren Abmessungen, wobei wenigstens die Breite oder die Höhe des länglichen Querschnitts unabhängig verändert werden kann, wenigstens eine Wechselwirkungszone (20, 20') zwischen dem länglichen Strahl und wenigstens zwei Strömen von Reagenzien, die orthogonal sind zu einer Ebene, in der die Achse OX und die erste Achse gelegen sind, wenigstens zwei Injektoren (22, 23, 24; 22', 23', 24'), die die wenigstens zwei jeweiligen Ströme von Reagenzien emittieren, wobei die wenigstens zwei Injektoren entlang einer Achse angeordnet sind, die parallel zur ersten Achse ist, derart, dass der Strom von Reagenzien, der aus diesen wenigstens zwei Injektoren austritt, durch den länglichen Querschnitt des Strahls bedeckt ist.

2. System nach Anspruch 1, bei dem der längliche Querschnitt ein rechteckiger Querschnitt ist.

3. System nach Anspruch 1, bei dem die Leistungsdichte des Strahls vor dem Erreichen jeder Wechselwirkungszone identisch ist.

4. Verfahren zur Produktion von nanometrischen oder submikrometrischen Pulvern in einem kontinuierlichen Strom unter der Einwirkung einer Laserpyrolyse, bei dem die Energie eines Lasers, der einen Strahl (11) entlang einer Achse OX emittiert, gefolgt von einer optischen Vorrichtung (12), die es erlaubt, einen Strahl mit länglicher Form zu transmittieren, entlang einer ersten Achse orthogonal zur Achse OX der Ausbreitung des Strahls in einem länglichen Querschnitt mit einstellbaren Abmessungen verteilt ist, wobei wenigstens die Breite oder die Höhe des länglichen Querschnitts unabhängig verändert werden kann, und in wenigstens einer Wechselwirkungszone (20, 20') zwischen dem länglichen Strahl und wenigstens zwei Strömen von Reagenzien, die orthogonal sind zu einer Ebene, in der die Achse OX und die erste Achse gelegen sind, wechselwirkt, wobei wenigstens zwei Injektoren (22, 23, 24; 22', 23', 24') die wenigstens zwei jeweiligen Ströme von Reagenzien emittieren, wobei die wenigstens zwei Injektoren entlang einer Achse parallel zur ersten Achse angeordnet sind, derart, dass der Strom von Reagenzien, der aus diesen wenigstens zwei Injektoren austritt, durch den länglichen Querschnitt des Strahls bedeckt ist.

5. Verfahren nach Anspruch 4, bei dem der längliche Querschnitt ein rechteckiger oder elliptischer Querschnitt ist.

6. Verfahren nach Anspruch 4, bei dem man den Verlust an Leistungsdichte dieses Strahls durch Absorption in einer Wechselwirkungszone durch eine Konzentration des Energiestroms in der nachfolgenden Wechselwirkungszone kompensiert.

7. Verfahren nach Anspruch 4, bei dem man die Art der Präkursoren von einem Injektor zum anderen für ein und dieselbe Wechselwirkungszone verändert.

8. Verfahren nach Anspruch 4, bei dem man einen Injektor einer Wechselwirkungszone für die Synthese oder die Einbringung von Tracerspezies verwendet.

## Claims

1. A system for continuous flow production of nanometric or sub-micrometric powders under the action of laser pyrolysis comprising a laser (10) emitting a beam (11) along an axis OX followed by an optical device (12) allowing transmission of a beam of elongated shape having its energy distributed along a first axis perpendicular to the propagation axis OX of the beam in an elongated cross-section with adjustable dimensions, wherein at least the width or the height of the elongated cross-section can be modified independently, at least one interaction area (20, 20') between the elongated beam and at least two flows of reagents which are perpendicular to a plane containing the axis OX and the first axis, at least two injectors (22, 23, 24 ; 22', 23', 24') respectively emitting the at least two flows of reagent, the at least two injectors being located along an axis parallel to the first axis so that the flow of reagents output from these at least two injectors are all covered by the elongated cross-section of the beam.

2. The system according to claim 1, wherein the elongated cross-section is a rectangular cross-section.

3. The system according to claim 1, wherein the power density of the beam is the same before reaching each interaction area.

4. A method for continuous flow production of nanometric or sub-micrometric powders under the action of laser pyrolysis wherein the energy of a laser emitting a beam (11) along an axis OX followed by an optical device (12) allowing transmission of a beam of elongated shape is distributed along a first axis perpendicular to the axis OX of propagation of the beam in an elongated cross-section with adjustable dimensions, wherein at least the width or the height of the elongated cross-section can be modified independently, and interacts at least at one interaction area (20, 20') between the elongated beam and at least two flows of reagents which are perpendicular to a plane containing the axis OX and the first axis, at least two injectors (22, 23, 24 ; 22', 23', 24') respectively emitting the at least two flows of reagent, the at least two injectors being located along an axis parallel to the first axis so that the flow of reagents output from these at least two injectors are all covered by the elongated cross-section of the beam.

5. The method according to claim 4, wherein the elongated cross-section is a rectangular or elliptical cross-section.

6. The method according to claim 4, wherein the power density loss of this beam by absorption in an interaction area is compensated by concentrating the energy flux in the following interaction area.

7. The method according to claim 4, wherein the nature of the precursors is changed from one injector to the other for a same interaction area.

8. The method according to claim 4, wherein an injector of an interaction area is used for synthesis or introduction of tracer species.
